# FASCICULE DE BREVET EUROPEEN

(11) **EP 2 030 844 B1**
(45) Date de publication et mention de la délivrance du brevet: **28.03.2012**
(21) Numéro de dépôt: 08163472.7
(22) Date de dépôt: 02.09.2008
(51) Int. Cl.: B60R 11/02

(54) **Support dans un véhicule pour appareil électronique nomade.**
Halterung in einem Fahrzeug für ein mobiles elektronisches Gerät
Support in a vehicle for a mobile electronic device

(30) Priorité: 03.09.2007 FR 0757317
(43) Date de publication de la demande: 04.03.2009
(73) Titulaire: ADM Concept, 87069 Limoges Cedex (FR)
(72) Inventeur: Mocquard, Dominique, 75014, PARIS (FR)
(74) Mandataire: Delprat, Olivier

(56) Documents cités:
- EP-A- 0 404 746
- WO-A-2006/078137
- WO-A-2006/135215
- US-A- 4 868 862
- US-A- 5 844 472
- US-A1- 2003 068 986

## Description

L'invention se rapporte aux équipements de véhicules automobiles et concerne en particulier un support pour appareil électronique nomade.

Plus particulièrement, l'invention concerne un tel support qui est destiné à intégrer un appareil nomade à l'habitacle d'un véhicule automobile.

On notera toutefois que l'on ne sort pas du cadre de l'invention lorsque le support est destiné à être monté dans d'autres types de véhicules. Ainsi, l'invention concerne, de manière générale, le montage d'un appareil électronique nomade dans tout type de véhicule, tel qu'un véhicule automobile, un aéronef, une machine agricole, ...

On notera également que l'intégration d'un tel appareil nomade dans l'habitacle concerne la planche de bord, les panneaux de porte, les sièges, la plage arrière,...

De même, par « appareil électronique nomade », on entend, dans le cadre de la présente description, tout type d'appareil électronique portatif, grand public, autonome et destiné à exécuter une ou plusieurs fonctions élémentaires, tels qu'un navigateur GPS, un lecteur numérique portatif de musique, de type lecteur MP3, un assistant personnel, un poste téléphonique mobile, un panneau solaire, un porte-bouteilles ou encore un support de stockage de données tel qu'une clé USB, une carte SIM, une carte mémoire, ...

Mais une application particulièrement intéressante de l'invention concerne le montage d'un navigateur GPS sur une planche de bord d'un véhicule automobile.

Comme on le sait, ce type d'appareil peut être intégré dans un véhicule comme système embarqué d'origine.

Cependant, les appareils électroniques nomades évoluent sans cesse et deviennent vite obsolètes. Un tel système embarqué d'origine n'est donc pas prévu pour accueillir des nouveaux types d'appareils.

D'autre part, ces appareils nomades sont habituellement fixés sur les planches de bord des véhicules automobiles à l'aide d'un système classique de ventouse.

Mais ce système, bien que permettant de rendre le support de l'appareil indépendant de la planche de bord du véhicule, ne prend pas en considération l'aspect esthétique général du véhicule.

En outre, le système de ventouse ne permet pas une fixation solide et fiable de l'appareil à la planche de bord, notamment en ce qui concerne les véhicules soumis à des vibrations, ce qui est susceptible d'entraîner la perte du support par désolidarisation.

Il existe également des supports d'appareils nomades qui sont intégrés dans la planche de bord d'un véhicule afin de ne pas dénaturer l'esthétique d'origine de ladite planche. On pourra à cet égard se référer par exemple à la demande de brevet français publiée sous le numéro FR 2909215, déposée sous le numéro 0655146 au nom du demandeur.

Mais, ce type de support nécessite de prévoir des découpes dans la planche de bord, ce qui les rend difficilement amovibles.

Un autre exemple de support est divulgué dans US 4868862 qui correspond au préambule de la revendication 1.

Le but de l'invention est donc de fournir un support pour appareil électronique nomade permettant de répondre aux besoins évoqués précédemment et, en particulier, de proposer un support pour appareil électronique nomade permettant de conserver l'aspect esthétique général de l'habitacle du véhicule, en particulier celui de la planche de bord, dans un agencement peu coûteux et facile à utiliser, tout en permettant à un utilisateur de disposer des fonctionnalités liées à l'utilisation de l'appareil lorsqu'il utilise son véhicule.

L'invention a donc pour objet un support pour appareil électronique nomade pour véhicule comportant au moins une embase destinée au montage du support et au moins un socle de réception de l'appareil monté sur l'embase.

Cette embase comporte des moyens de fixation du support sur un équipement du véhicule intégré à l'habitacle.

Grâce à cet agencement, l'utilisateur dispose d'un support destiné à recevoir un appareil nomade et adapté à un équipement de l'habitacle du véhicule pour garantir l'esthétique d'origine du véhicule, en procurant l'impression que ce support a été installé en première monte.

En outre, le support étant fixé sur un équipement de l'habitacle du véhicule, cela permet également de fixer de manière plus solide et plus fiable l'appareil nomade au véhicule.

On notera toutefois que, par « équipement de l'habitacle », on entend, dans le cadre de la présente description, tout type de pièce ou organe de l'habitacle du véhicule destiné à exécuter une ou plusieurs fonctions élémentaires, tels qu'un aérateur, voire un cadran d'indication de vitesse, un poste autoradio, un tableau de contrôle de climatisation, une boîte de rangement, un enjoliveur de commande d'ouverture de porte, ...

Dans un mode de mise en oeuvre, les moyens de fixation comprennent des moyens pour la fixation du support sur un aérateur intégré à la planche de bord.

Selon une autre caractéristique de l'invention, le socle est décalé latéralement par rapport à l'embase. On facilite alors l'usage de l'équipement sur lequel le support est fixé.

Par exemple, l'embase comporte des moyens d'encliquetage destinés à coopérer avec des moyens d'encliquetage complémentaires prévus sur ledit équipement.

Par exemple, le socle peut en outre comporter des moyens d'encliquetage destinés à coopérer avec des moyens d'encliquetage prévus sur l'embase.

Selon encore une autre caractéristique de l'invention, le socle est monté de manière pivotante sur l'embase.

Dans un autre mode de mise en oeuvre, les moyens de fixation comprennent des moyens de fixation sur un boîtier de rangement, notamment intégré à la planche de bord.

Ainsi, par exemple, l'embase constitue un couvercle de fermeture du boîtier et est montée de manière articulée sur le boîtier entre une première position de fermeture du boîtier et une deuxième position d'ouverture dudit boîtier.

Avantageusement, le socle comporte un logement de réception de l'appareil et est monté de manière articulée sur l'embase entre une première position dans laquelle le socle est rabattu contre l'embase dans la première position de l'embase et une deuxième position dans laquelle le socle est dressé à partir de l'embase pour tourner l'appareil en position d'articulation.

En outre, avantageusement le socle comporte des moyens pour maintenir l'embase en position intermédiaire entre lesdites première et deuxième positions.

Avantageusement, l'embase comprend une partie cylindrique qui délimite intérieurement un passage rendant accessible ledit équipement.

Selon encore une autre caractéristique de l'invention, l'embase et le socle sont réalisés en matière plastique injectée.

L'invention a également pour objet, selon un deuxième aspect, un procédé de montage d'un support tel que défini ci-dessus, sur un équipement du véhicule intégré à l'habitacle, dans lequel on enlève une pièce dudit équipement et l'on substitue l'embase à ladite pièce.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue en perspective d'un support conforme à l'invention destiné au montage d'un navigateur GPS ;
- la figure 2 montre le support de la figure 1 après installation d'un navigateur GPS ;
- la figure 3 illustre une partie d'une planche de bord d'un véhicule automobile après montage d'un support selon l'invention ;
- la figure 4 est une vue en perspective d'un boîtier de rangement d'une planche de bord d'un véhicule automobile ;
- la figure 5 illustre l'intégration d'un navigateur GPS après montage d'un support conforme à l'invention sur un boîtier de rangement représenté à la figure 4 ; et
- la figure 6 est une vue schématique en coupe d'un exemple de réalisation d'un support pour navigateur GPS sur un boîtier de rangement.

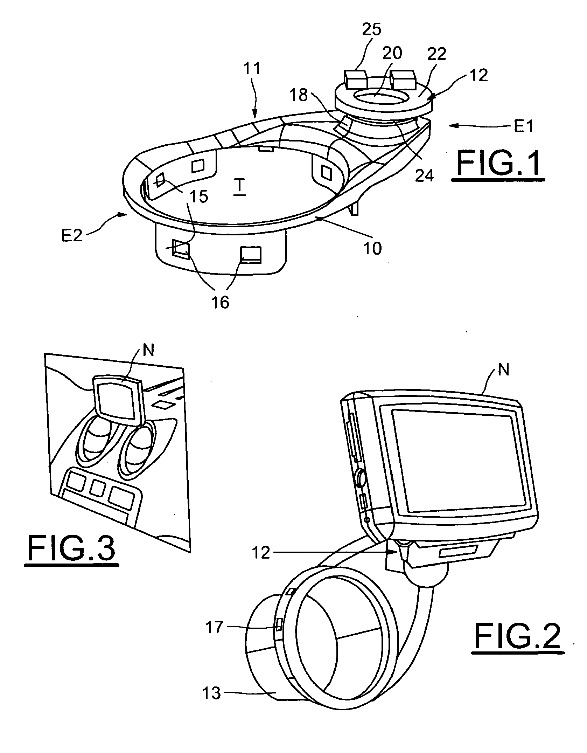

Sur les figures 1 et 2, on a représenté une vue en perspective d'un support 10 pour un appareil électronique nomade conforme à l'invention.

Le support 10 est destiné à intégrer un appareil électronique nomade à l'habitacle d'un véhicule automobile.

Dans l'exemple de réalisation représenté sur ces figures, le support est destiné au montage d'un navigateur GPS N (figure 2) et est prévu pour venir se fixer sur un équipement de l'habitacle, en l'espèce de la planche de bord d'un véhicule automobile, constitué ici par un aérateur.

Mais l'on ne sort pas du cadre de l'invention lorsque le support 10 est destiné à intégrer un porte-bouteilles, un panneau solaire ou tout type d'équipement destiné à venir se monter sur la planche de bord d'un véhicule automobile.

Dans l'exemple illustré, dans lequel le support vient se monter sur un aérateur, le support 10 comporte une embase 11 et un socle 12. L'embase 11 a une forme générale ovoïde et comporte une première extrémité E1 servant au montage du navigateur N par l'intermédiaire d'un socle 12 approprié et une deuxième extrémité E2 dédiée au montage du support 10 sur l'aérateur. Le support 10 comporte à cet effet un trou T sous la forme d'un évidement pratiqué dans la deuxième extrémité E2 de dimension et de forme complémentaire de celles d'un conduit 13 d'aérateur (figure 2). Des pattes d'encliquetage 15, ici au nombre de trois, s'étendent à partir du bord du trou T et, en particulier, à partir d'une face de l'embase 11 opposée à la face sur laquelle vient se monter le socle 12.

Comme on le voit, chaque patte comprend un ensemble d'orifices, tels que 16, par exemple au nombre de deux, dans lesquels s'encliquètent des crans d'encliquetage 17 complémentaires pratiqués dans la surface périphérique externe, ou interne, du conduit 13, dédiés, de manière conventionnelle, au montage par encliquetage d'un enjoliveur pour l'aérateur.

Mais on ne sort pas du cadre de l'invention lorsque les crans sont pratiqués dans les pattes 15 et les orifices sont prévus sur le conduit.

La première extrémité E1, dédiée au montage du socle 12, comporte une jupe 18, par exemple de forme générale tronconique, dans laquelle s'engage le socle 12.

En ce qui concerne le socle 12, celui-ci comporte un corps 20 pourvu à une extrémité d'une tête de fixation 22, destinée à recevoir l'appareil nomade, et à son extrémité opposée d'un pied 24. Ce pied 24 comporte des moyens d'encliquetage destinés à s'encliqueter de manière amovible dans la jupe 18. Par exemple, on prévoira une gorge annulaire dans le pied destiné à recevoir par déformation élastique le bord d'extrémité libre de la jupe 18.

La tête 22 comporte, quant à elle, des pions 25 servant à la fixation du navigateur N en s'engageant dans des logements complémentaires prévus dans le boîtier du navigateur.

On notera que ces pièces sont adaptées et configurées pour fournir un support universel pour les appareils.

Ainsi, après encliquetage du support dans l'aérateur et après montage, le navigateur est maintenu par le socle 12, lequel est encliqueté de manière amovible dans la jupe 18. On obtient ainsi l'agencement visible sur la figure 3.

On notera également que, de préférence, le socle 12 est monté de manière pivotante sur l'embase afin de permettre une orientation de l'appareil vers l'utilisateur.

Dans l'exemple de réalisation qui vient d'être décrit, l'embase 11 vient directement se monter par encliquetage sur le conduit de l'aérateur.

Il est également possible en variante, de prévoir une fixation par collage dans le cas où l'aérateur n'est pas conformé pour un tel encliquetage.

Comme indiqué précédemment, l'invention qui vient d'être décrite n'est pas limitée au montage d'un appareil nomade de type GPS sur un aérateur de planche de bord.

Ainsi, le support selon l'invention peut également s'utiliser, de manière générale, pour le montage d'un appareil sur d'autres équipements de l'habitacle.

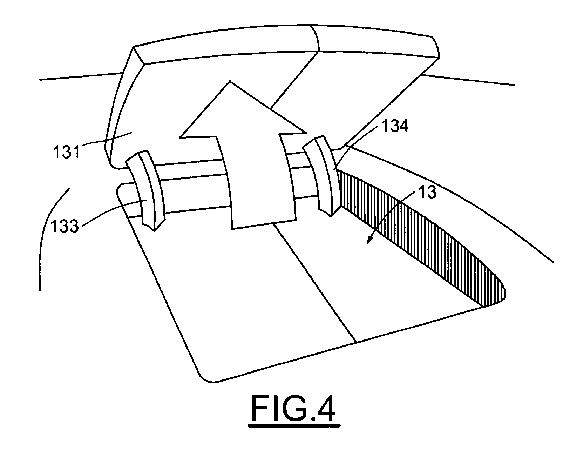

Sur la figure 4, on a représenté une vue en perspective d'un boîtier de rangement 13 d'une planche de bord d'un véhicule automobile sur laquelle vient se fixer un tel support. De manière conventionnelle, le boîtier est pourvu d'un couvercle 131 et de deux bras articulés 133 et 134 servant au montage du couvercle de manière articulée sur le boîtier entre des positions d'ouverture et de fermeture.

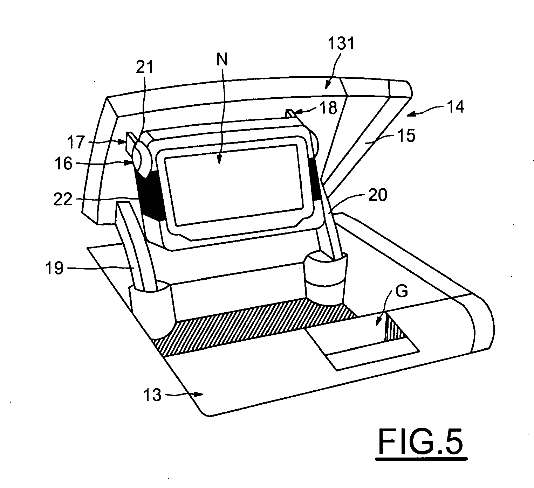

Sur la figure 5, on a représenté une vue en perspective d'un support 14 conforme à l'invention servant au montage d'un appareil nomade sur un tel boîtier. Ledit support est ici destiné à intégrer un navigateur GPS N à la boîte de rangement 13.

Pour ce faire, on substitue le support 14 au couvercle 131.

Le support 14 comporte ici une embase 15 qui, après montage, constitue le couvercle du boîtier et un socle 16 comprenant deux pattes 17 et 18 servant au montage de l'appareil nomade N sur l'embase 15.

Comme on le voit, l'embase 15 comporte deux pattes 19 et 20 identiques aux pattes 133 et 134 du couvercle 131 (figure 4) et servent ainsi au montage de l'embase 15 de manière articulée par rapport au boîtier 13 entre une première position de fermeture du boîtier et une deuxième position d'ouverture du boîtier, visible sur la figure 5.

En ce qui concerne le socle, les pattes 17 et 18 sont chacune solidaires de l'embase 15.

Elles sont chacune pourvues d'une extrémité libre, telle que 21, sur laquelle est articulée une base 22 servant à la réception de l'appareil N. Par exemple, la base 22 constitue une glissière dans laquelle vient s'engager, par coulissement, l'appareil N, celui-ci étant maintenu par frottement.

Mais l'on ne sort pas du cadre de l'invention lorsque la base 22 est pourvue de tout autre moyen de maintien de l'appareil N.

Par exemple, pour son articulation sur les pattes 17 et 18, la base 22 peut être pourvue de deux pions latéraux qui s'engagent dans des orifices correspondants pratiqués dans l'extrémité libre 21 des pattes. Mais, bien entendu, tout autre moyen de montage de la base 22 sur les pattes peut également être prévu.

Toutefois, dans les différentes variantes qui peuvent être envisagées, la base 22 est articulée par rapport à l'embase 15 entre une première position dans laquelle elle est rabattue contre l'embase et une deuxième position dans laquelle elle est dressée à partir de cette dernière, par exemple dans une position sensiblement oblique par rapport au plan général de l'embase.

Comme on le conçoit, la première position de la base 22 est utilisée lorsque l'embase est rabattue, dans sa première position, dans laquelle elle vient fermer le boîtier 13.

La deuxième position est utilisée en position d'ouverture du boîtier pour orienter l'appareil N vers l'utilisateur.

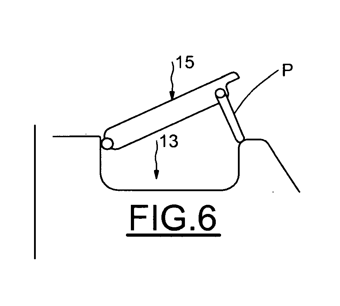

On pourra, à cet égard, comme illustré à la figure 6, doter la base 22 d'un pied P articulé dont l'extrémité libre comporte un penne qui vient s'engager dans une gâche G du boîtier 13 afin de maintenir l'embase 15 dans sa position d'utilisation.

Dès lors, l'embase 15, qui constitue le couvercle du boîtier 13 est maintenu dans une position angulaire inférieure à celle qui correspond à une ouverture complète du boîtier ou, en d'autres termes, est bloquée dans une position d'ouverture intermédiaire, de l'ordre de 45° ou de 60°, ce qui permet d'éviter que le champ de vision du conducteur ou des passagers ne soit occulté.

On notera par ailleurs que dans l'exemple de réalisation décrit en référence à la figure 5, le support est ici constitué de deux pattes 17 et 18 qui supportent une base 22, laquelle reçoit l'appareil N.

Mais l'on ne sort pas du cadre de l'invention lorsque l'appareil N est maintenu sur l'embase au moyen d'un socle comprenant, de manière générale, une ou plusieurs pattes et un organe de maintien de l'appareil, par exemple de type ventouse, pion ou analogue.

On notera que le support qui vient d'être décrit aux figures 1 à 4 est particulièrement adapté pour constituer un accessoire destiné à être monté sur un équipement de l'habitacle d'un véhicule en deuxième monte chez un concessionnaire de véhicule automobile ou chez un revendeur d'accessoires pour véhicules automobile.

On notera également que, de préférence, le support qui vient d'être décrit est réalisé en matière plastique injectée.

En outre, avantageusement, les éléments du support, à savoir, le socle et l'embase sont des éléments amovibles. Ces éléments comportent des moyens d'encliquetage qui assurent une mobilité des éléments les uns par rapport aux autres.

Toutefois, ces éléments peuvent également être réalisés en une pièce.

Mais, la réalisation en deux parties du support permet de prévoir la réalisation de l'embase en fonction du type de véhicule et du socle en fonction de la nature de l'appareil à recevoir.

On notera enfin que grâce à la réalisation de l'embase et en particulier au montage de l'embase par l'une de ses extrémités et du socle par l'autre extrémité, l'appareil N est décalé par rapport à la zone de fixation du support de sorte que l'équipement sur lequel il est monté reste parfaitement accessible et conserve ses fonctionnalités.

## Revendications

1. Support pour appareil électronique nomade pour véhicule comportant au moins une embase (11) destinée au montage du support et au moins un socle (12) de réception de l'appareil monté sur l'embase, l'embase comportant des moyens de fixation pour la fixation du support sur un équipement du véhicule intégré à l'habitacle, et dans lequel l'embase (11) et le socle (12) sont constitués de deux pièces distinctes, **caractérisé en ce que** l'embase comportant une jupe (18) dans laquelle s'engage le socle (12), l'embase (11) comprenant un passage rendant accessible ledit équipement.

2. Support selon la revendication 1, **caractérisé en ce que** les moyens de fixation comprennent des moyens pour la fixation du support sur un aérateur intégré, à la planche de bord du véhicule.

3. Support selon la revendication 2, dans lequel le socle (12) est décalé latéralement par rapport à l'embase (11).

4. Support selon l'une quelconque des revendications 2 à 3, dans lequel l'embase (11) comporte des moyens d'encliquetage destinés à coopérer avec des moyens d'encliquetage prévus sur l'aérateur (13).

5. Support selon l'une des revendications 2 à 4, dans lequel le socle (12) comporte des moyens d'encliquetage destinés à coopérer avec des moyens d'encliquetage prévus sur l'embase (11).

6. Support selon l'une des revendications 2 à 5, dans lequel le socle (12) est monté pivotant sur l'embase (11).

7. Support selon l'une des revendications 1 à 6, dans lequel l'embase (11) et le socle (12) sont réalisés en matière plastique injectée.

8. Utilisation d'un support selon l'une des revendications 1 à 7 pour le support d'un système de positionnement global portatif sur une planche de bord d'un véhicule automobile.

9. Procédé de montage d'un support (10) selon l'une des revendications 1 à 7 sur un équipement du véhicule intégré à l'habitacle, **caractérisé en ce que** l'on enlève une pièce dudit équipement et l'on substitue l'embase (11) à ladite pièce.

## Claims

1. Support for portable electronic devices for vehicles, including at least one base (11) for mounting the support and at least one stand (12) for receiving the device mounted on the base, the base including fixing means for fixing the support to an equipment of the vehicle integrated into the passenger compartment, and wherein the base (11) and the stand (12) consist of two separate parts, **characterized in that** the base includes a skirt (18) in which the stand (12) engages and the base (11) includes a passage rendering said equipment accessible.

2. Support according to Claim 1, **characterized in that** the fixing means comprise means for fixing the support to a ventilator integrated into the dashboard of the vehicle.

3. Support according to Claim 2, wherein the stand (12) is offset laterally relative to the base (11).

4. Support according to either of Claims 2 or 3 wherein the base (11) includes clipping means adapted to cooperate with clipping means provided on the ventilator (13).

5. Support according to any one of Claims 2 to 4, wherein the stand (12) includes clipping means adapted to cooperate with clipping means provided on the base (11).

6. Support according to any one of Claims 2 to 5, wherein the stand (12) is pivotally mounted on the base (11) .

7. Support according to any one of Claims 1 to 6, wherein the base (11) and the stand (12) are produced in injection molded plastic material.

8. Use of a support according to any one of Claims 1 to 7 to support a portable satellite navigation device on a dashboard of an automobile vehicle.

9. Method of mounting a support (10) according to any one of Claims 1 to 7 on an equipment of the vehicle integrated into the passenger compartment, **characterized in that** part of said equipment is removed and the base (11) is substituted for said part.

## Patentansprüche

1. Halterung für ein mobiles elektronisches Gerät für ein Fahrzeug mit mindestens einem Unterteil (11) zur Montage der Halterung und mindestens einem Sockel (12) zur Aufnahme des am Unterteil montierten Geräts, wobei das Unterteil Befestigungsmittel zur Befestigung der Halterung an einer im Fahrzeuginnenraum integrierten Ausstattung des Fahrzeugs umfasst und das Unterteil (11) und der Sockel (12) aus zwei separaten Teilen bestehen, **dadurch gekennzeichnet, dass** das Unterteil eine Schürze (18) umfasst, die der Sockel (12) in Eingriff nimmt, sowie einen Durchgang, der die Ausstattung zugänglich macht.

2. Halterung nach Anspruch 1, **dadurch gekennzeichnet, dass** die Befestigungsmittel Mittel zur Befestigung der Halterung an einer im Armaturenbrett des Fahrzeugs integrierten Belüftungsöffnung umfassen.

3. Halterung nach Anspruch 2, wobei der Sockel (12) bezüglich des Unterteils (11) seitlich versetzt ist.

4. Halterung nach einem der Ansprüche 2 bis 3, wobei das Unterteil (11) Einrastmittel umfasst, die dazu bestimmt sind, mit an der Belüftungsöffnung (13) vorgesehenen Einrastmitteln zusammenzuwirken.

5. Halterung nach einem der Ansprüche 2 bis 4, wobei der Sockel (12) Einrastmittel umfasst, die dazu bestimmt sind, mit am Unterteil (11) vorgesehenen Einrastmitteln zusammenzuwirken.

6. Halterung nach einem der Ansprüche 2 bis 5, wobei der Sockel (12) schwenkend am Unterteil (11) montiert ist.

7. Halterung nach einem der Ansprüche 1 bis 6, wobei das Unterteil (11) und der Sockel (12) aus spritzgegossenem Kunststoff hergestellt sind.

8. Verwendung einer Halterung nach einem der Ansprüche 1 bis 7 zur Halterung eines tragbaren globalen Positionsbestimmungssystems an einem Armaturenbrett eines Kraftfahrzeugs.

9. Verfahren zur Montage einer Halterung (10) nach einem der Ansprüche 1 bis 7 an einer im Fahrzeuginnenraum integrierten Ausstattung des Fahrzeugs, **dadurch gekennzeichnet, dass** ein Teil der Ausstattung entnommen und durch das Unterteil (11) ersetzt wird.
